# EUROPÄISCHE PATENTSCHRIFT

(11) **EP 2 346 109 B1**
(45) Veröffentlichungstag und Bekanntmachung des Hinweises auf die Patenterteilung: **14.11.2012**
(21) Anmeldenummer: 10015916.9
(22) Anmeldetag: 22.12.2010
(51) Int. Cl.: H01M 2/10, H01M 2/12, H01M 2/20

(54) **Zellenpack mit mehreren mittels Vergussmasse zusammengehaltenen Einzelzellen**
Cell pack with multiple individual cells held together by means of sealing compound
Paquet de cellules doté de plusieurs cellules individuelles maintenues ensemble à l'aide d'une masse de remplissage

(30) Priorität: 18.01.2010 DE 102010000106
(43) Veröffentlichungstag der Anmeldung: 20.07.2011
(73) Patentinhaber: REVA GmbH Vertrieb von elektronischen Produkten, 73249 Wernau (DE)
(72) Erfinder: Meyer-Bockhorn, Nicolas, 72320 Kirchheim / Teck (DE); Donnert, Martin, 85305 Jetzendorf (DE)
(74) Vertreter: Jeck, Anton

(56) Entgegenhaltungen:
- EP-A1- 0 304 568
- DE-A1-102007 010 740
- DE-T2- 69 821 446
- US-A1- 2005 164 080

## Beschreibung

Die Erfindung betrifft ein Zellenpack mit mehreren mittels Vergussmasse zusammengehaltenen Einzelzellen die mit einem Pluspol und einem Minuspol versehen sind und im Bereich um den Pluspol Entgasungsöffnungen und gegebenenfalls innerhalb einen Stromunterbrecher (CID) aufweisen.

Es ist ein Zellenpack bekannt, bei dem die Einzelzellen in Reihen und Spalten aneinander gereiht sind. Der Zusammenhalt des Zellenpacks wird dadurch erreicht, dass die zwischen den Einzelzellen dabei entstehenden Zwischenräume mit Vergussmase ausgegossen werden. Die Vergussmasse verbindet sich mit dem Außenmantel der Einzelzellen und hält diese in einem Zellenpack fest zusammen.

Die Einzelzellen können im Bereich um den Pluspol mit Entgasungsöffnungen versehen sein und im Innern einen Stromunterbrecher aufweisen, der bei einer Überlastung diese Einzelzelle aus dem Zellenblock abschaltet. Dieser bekannte Zellenpack hat den Nachteil, dass beim Vergießen die Entgasungsöffnungen verschlossen werden können, was zu einem unerwünschten Ausfall der vorgenannten Sicherheitselemente führt.

Aus der DE 698 21 446 ist eine in einem geschlossenen Gehäuse untergebrachte Bleisäure-Speicherbatterie bekannt, die mehrere Elektrodengruppen umfasst. Die offene Oberseite des Behälters wird mit einem Deckel verschlossen, der pro Zelle einen abgestuften Aufnahmerand aufweist. In diesen Aufnahmerand ist ein Blattgummiventil eingesetzt, wobei Naturgummi verwendet ist. Dieses Entlüftungsventil dient zur Entlüftung der aufgenommenen Zelle der Blausäure- Speicherbatterie. Zudem deckt das Blattgummiventil einen Einlassanschluss in den Deckel für die aufgenommene Zelle ab.

Diese Verhältnisse sind nicht mit den Bedingungen bei einem Batterie-Zellenpack von einzelnen Batterie-Zellen vergleichbar, da die Einzelzellen auch durch eine eingebrachte Verschlussmasse zu einer festen Einheit verbunden werden müssen.

Dasselbe gilt auch für eine Batterie mit Elektrolyt, die in einem geschlossenen Gehäuse untergebracht ist, wie sie in der EP 03-045 68 A1 gezeigt ist. Dabei ist jeder Einzelzelle ein Entgasungsventil zugeordnet.

In der DE 10 2007 010740 A1 ist ein weiterer Zellenpack nach dem Stand der Technik offenbart.

Es ist Aufgabe der Erfindung einen Zellenpack der eingangs erwähnten Art zu schaffen, bei dem eindeutig sichergestellt ist, dass beim Einbringen der Vergussmasse in den Zellenpack keine Entgasungsöffnungen von Einzelzellen verschlossen und so die Funktionsweisen des Zellenpacks gestört werden kann.

Die gestellte Aufgabe wird mit den Merkmalen des Anspruchs 1 gelöst.

Bei dieser Ausgestaltung des Zellenpacks sind die Einzelzellen im Bereich des Pluspols mit einem schmalen Schweißverbinder verbunden, vorzugsweise verschweißt. Dieser Schweißverbinder ist mit einem gleichen oder einem anderen Pol einer im Zellenpack daneben angeordneten Einzelzelle verbunden, vorzugsweise verschweißt. Die Stirnseiten über den Pluspolen mit den Entgasunsöffnungen sind mit Schaumstoffstopfen abgedeckt, die für aus den Entgasungsöffnungen der Einzelzellen ausströmendes Gas durchlässig sind. Diese Schaumstoffstopfen schützen jedoch die Entgasungsöffnungen und verhindern so einen Verschluss durch die Vergussmasse. Zwischen den Schweißverbindern und den Schaumstoffstopfen sind Aussparungen gebildet, durch die die Vergussmasse in die Zwischenräume zwischen den Einzelzellen des Zellenpacks eingebracht werden kann.

Weitere vorteilhafte Ausgestaltungen der Erfindung sind den Unteransprüchen entnehmbar.

So kann in vorteilhafter Weise vorgesehen sein, dass die Schaumstoffstopfen aller Einzelzellen zu einer Schaumstoffmatte mit den Aussparungen einstückig zusammengefasst sind. Dabei kann die Außenkontur der Schaumstoffmatte an die Außenkontur des Zellenpacks angepasst sein. Dadurch wird die Herstellung des Zellenpacks mit wenig Zusatzteilen erleichtert und verbilligt.

Um die Abdichtung des Pluspols noch zu verbessern, sieht eine weitere Ausgestaltung vor, dass zwischen dem .Pluspol und den Schweißverbindern Dichtungsringe angeordnet sind, die den Bereich des Pluspols mit den Entgasungsöffnungen gegenüber der Außenkontur der Einzelzelle abdichten.

Damit wird sichergestellt, dass selbst dünnflüssige Vergussmasse nicht über den Rand der Einzelzelle in den Bereich des Pluspols eindringen und die Entgasungsöffnungen verschließen kann.

Die Verbindung der Einzelzellen im Zellenpack in Reihen- und Parallelhaltung wird dadurch erreicht, dass der Schweißverbinder gleiche Pole oder ungleiche Pole benachbarter Einzelzellen miteinander verbindet.

Die Herstellung des Zellenpacks wird dadurch noch vereinfacht, dass die Schaumstoffmatte auf der dem Zellenpack zugekehrten Seite mit einer selbstklebenden Schicht versehen ist. Die Verbindung der Schaumstoffmatte mit dem Zellenpack ist dann ein einfacher Klebvorgang.

Die Erfindung wird anhand eines Ausführungsbeispiels näher erläutert. Es zeigen:
- Fig. 1: die Seitenansicht einer Einzelzelle mit Dichtungsring, Schweißverbinder und Schaumstoffstopfen,
- Fig. 2: die Ansicht auf den Pluspol der Einzelzelle nach Fig. 1,
- Fig. 3: die Seitenansicht eines Schaumstoffstopfens,
- Fig. 4: einen Zellenpack in Draufsicht auf eine Polseite mit Schweißverbindern,
- Fig. 5: eine Schaumstoffplatte mit mehreren, zusammengefassten Schaumstoffstopfen und
- Fig. 6: eine perspektivische Ansicht eines Zellenpacks.

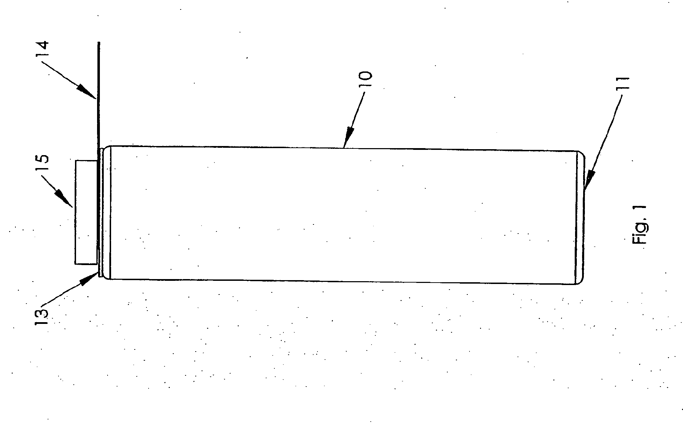

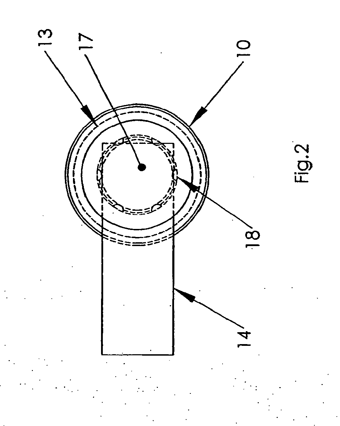

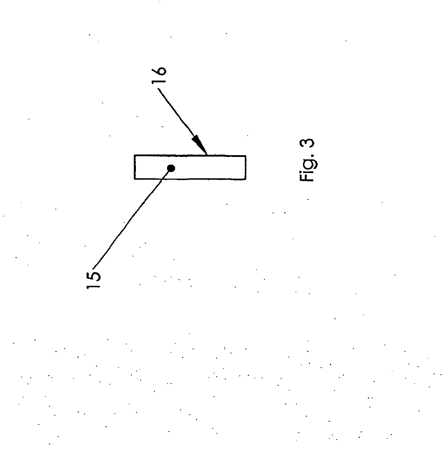

Die in Fig. 1 dargestellte Einzelzelle 10 ist ein Einzelelement für einen Zellenpack. Dabei bildet die untere, glatte Stirnseite den Minuspol 11. Auf der oberen Stirnseite ist der Pluspol 17 vom Mantel der Einzelzelle 10 abgesetzt, wie Fig. 2 zeigt. Dabei deckt ein Dichtungsring 13 den Bereich um den Pluspol 17 mit den Entgasungsöffnungen 18 ab. Auf den Pluspol 17 ist dann ein schmaler Verschweißverbinder 14 aufgesetzt und damit vorzugsweise verschweißt. Ein Verschlussstopfen 15 mit rückseitiger Selbstklebe-Schicht 16 ist auf den Schweißverbinder 14 aufgeklebt und deckt den Bereich um den Pluspol 17 mit den Entgasungsöffnungen 18 ab (Fig. 3). Dieser Verschlussstopfen 15 ist gasdurchlässig, so dass Gas aus den Entgasungsöffnungen 18 durch den Schaumstoffstopfen 15 gelangen kann, die Entgasungsöffnungen 18 jedoch gegen Eindringen von Vergussmasse schützt. Denselben Zweck hat auch der Dichtungsring 13, so dass auch von der Außenseite der Einzelzelle 10 her, keine dünnflüssige Vergussmasse in den Bereich des Pluspols 17 mit den Entgasungsöffnungen 18 eindringen kann.

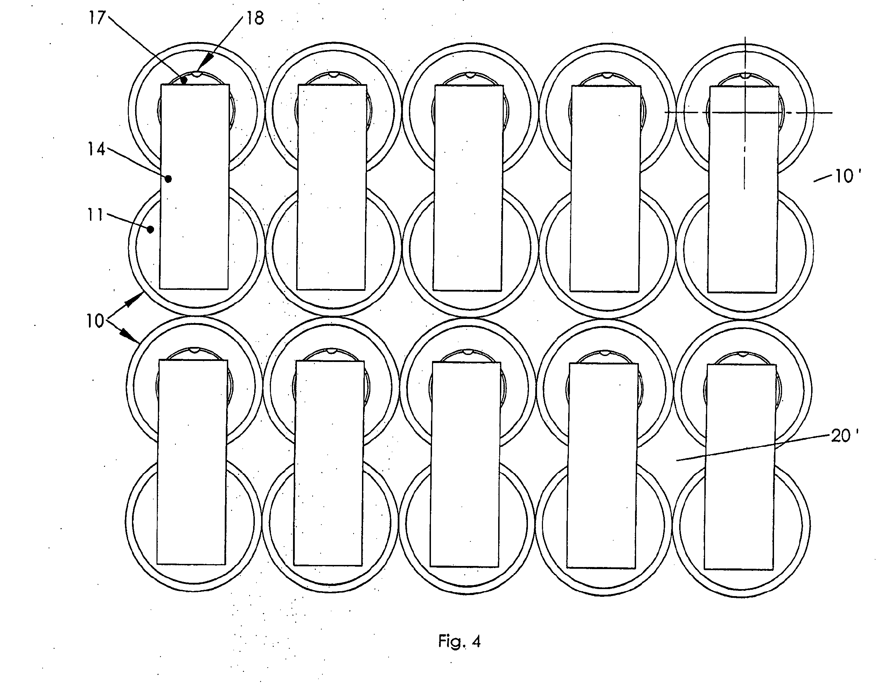

Wie Fig. 4 zeigt, werden die Einzelzellen 10 in Reihen und Spalten zu einem Zellenpack 10' zusammengestellt, wobei zwischen den Einzelzellen 10 Zwischenräume 20 frei bleiben. Die Einzelzellen 10 sind über Schweißverbinder 14 miteinander verbunden, vorzugsweise verschweißt.

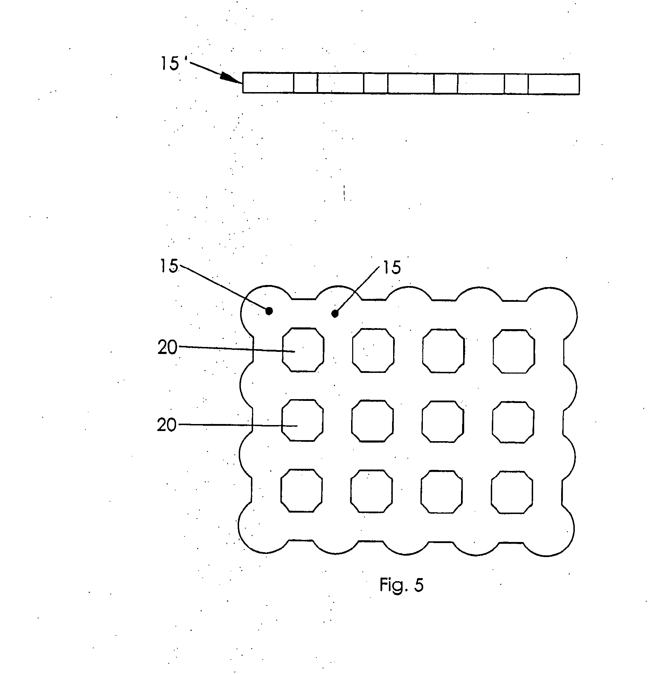

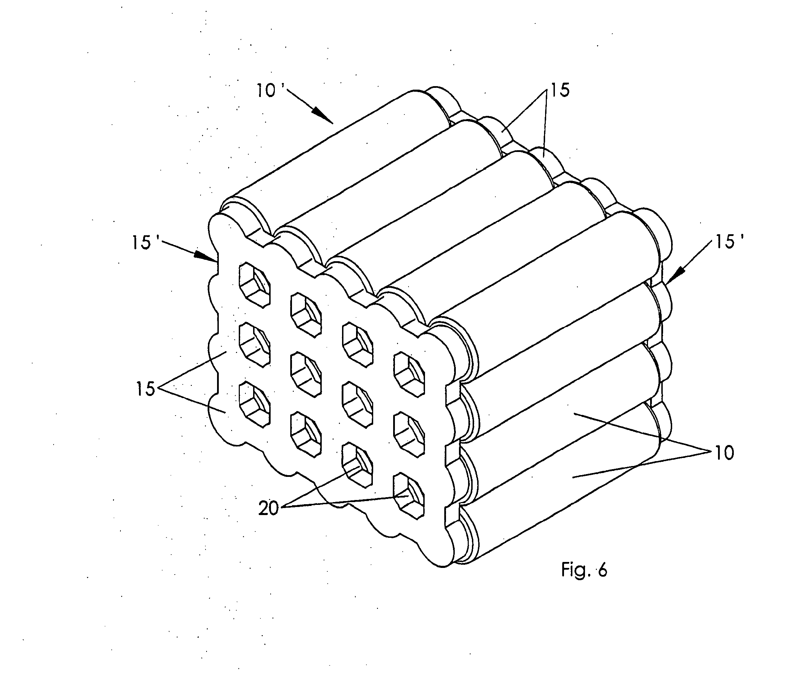

Die Schweißverbinder 14 sind schmal ausgebildet, so dass Entgasungsöffnungen 18 neben dem Pluspol 17 nicht abgedeckt sind. Die Schaumstoffptatte 15 vereinigt in sich die Gesamtzahl der Schaumstoflstopfen 15; lässt zwischen diesen jedoch eine Aussparung 20 frei, wie Fig. 5 zeigt. Diese Schaumstoffplatte 15 kann mit einer rückzeitigen Selbstklebe-Schicht auf den Zellenpack 10' nach Fig. 4 aufgeklebt werden. Dabei können die Aussparungen 20 mit dem Zwischenrahmen 20 des Zellenpacks 10' nach Fig. 4 zur Deckung, so dass die Vergussmasse eingebracht werden kann. Die Vergussmasse verbindet die Mäntel der Einzelzellen 10 zu einer unlösbaren Einheit, wie in Fig. 6 dargestellt ist. Dabei kann eine Schaumstoffplatte 15 auf beiden Stirnseiten des Zellenpacks 10' aufgeklebt werden, wobei die Einzelzellen 10 in beiden Richtungen des Zellenpacks 10' angeordnet werden können und entsprechend mit Dichtungsringen 13 und Schweißverbindern 14 miteinander verschweißt und abgedichtet sind. Die Schweißverbinder 14 können dabei wie gezeigt, ungleiche Pole von benachbarten Einzelzellen 10 miteinander verbinden. Die Schweißverbinder 14 können auch eine andere Reihen- und/oder Parallelschaltung der Einzelzellen 10 bringen, wenn diese gleiche und/oder andere Pole, Pluspole 17 und/oder Minuspole 11, miteinander verbinden.

## Patentansprüche

1. Zellenpack (10') mit mehreren mittels Vergussmasse zusammengehaltenen Einzelzellen (10), die mit einem Pluspol (17) und einem Minuspol (11) versehen sind und im Bereich um den Pluspol (17) Entgasungsöffnungen (18) und gegebenenfalls innerhalb einen Stromunterbrecher (CID) aufweisen,
**dadurch gekennzeichnet,**
**dass** die Einzelzellen (10) im Bereich des Pluspols (17) mit einem schmalen Schweißverbinder (14) verbunden sind, der mit einem gleichen oder anderen Pol (11, 17) einer im Zellenpack (10') daneben angeordneten Einzelzelle (10) verbunden ist,
**dass** die Stirnseiten über den Pluspolen (17) mit den Entgasungsöffnungen (18) mit Schaumstoffstopfen (15) abgedeckt sind, die für aus den Entgasungsöffnungen (18) den Einzelzellen (10) ausströmendes Gasdurchlässig sind und die Entgasungsöffnungen (18) gegen Eindringen von Vergussmasse schützen und
**dass** zwischen den Schweißverbindern (14) und den Schaumstoffstopfen (15) Aussparungen zum Einbringen der Vergussmasse in die Zwischenräume (20') zwischen den Einzelzellen (10) des Zellenpacks (10') gebildet sind.

2. Zellenpack nach Anspruch 1,
**dadurch gekennzeichnet,**
**dass** die Schaumstoffstopfen (15) aller Einzelzellen (10) zu einer Schaumstoffmatte (15') mit den Aussparungen (20) einstückig zusammengefasst sind.

3. Zellenpack nach Anspruch 2,
**dadurch gekennzeichnet,**
**dass** die Außenkontur der Schaumstoffmatte (15') an die Außenkontur des Zellenpacks (10') angepasst ist.

4. Zellenpack nach Anspruch 1 bis 3,
**dadurch gekennzeichnet,**
**dass** zwischen den Pluspolen (17) und den Schweißverbindern (14) Dichtungsringe (13) angeordnet sind, die den Bereich des Pluspols (17) mit den Entgasungsöffnungen (18) gegenüber der Außenkontur der Einzelzelle (10) abdichten.

5. Zellenpack nach Anspruch 1 bis 4,
**dadurch gekennzeichnet,**
**dass** der Schweißverbinder (14) mit dem Pluspol (17) und einem gleichen oder einem anderen Pol (11, 17) einer daneben angeordneten Einzelzelle (10) verschweißt ist.

6. Zellenpack nach Anspruch 5,
**dadurch gekennzeichnet,**
**dass** der Schweißverbinder (14) den Pluspol (17) einer Einzelzelle (10) mit dem Minuspol (11) einer anderen Einzelzelle (10) verbindet.

7. Zellenpack nach Anspruch 5,
**dadurch gekennzeichnet,**
**dass** der Schweißverbinder (14) den Pluspol (17) der einen Einzelzelle (10) mit dem Pluspol (17) einer anderen Einzelzelle (10) verbindet.

8. Zellenpack nach Anspruch 5,
**dadurch gekennzeichnet,**
**dass** der Schweißverbinder (14) den Minuspol (11) einer Einzelzelle (10) mit dem Minuspol (11) einer anderen Einzelzelle (10) verbindet.

9. Zellenpack nach Anspruch 1 bis 8,
**dadurch gekennzeichnet,**
**dass** die Schaumstoffmatte (15') auf der dem Zellenpack (10') zugekehrten Seite mit einer selbstklebenden Schicht (16) versehen ist.

## Claims

1. A cell pack (10'), having a plurality of individual cells (20) held together by means of potting compound, which are provided with a positive pole (17) and a negative pole (11) and which in the vicinity of the positive pole (17) have degassing openings (18) and optionally inside a current interrupter (CID),
**characterized in that**
the individual cells (10) are connected in the vicinity of the positive pole (17) to a narrow welded connector (14), which is connected to the same or a different pole (11, 17) of an individual cell (10) disposed next to it in the cell pack (10');
that the face ends above the positive poles (17) having the degassing openings (18) are covered with foam plugs (15), which are permeable to gas flowing out from the individual cells (10) through the degassing openings (18) and which protect the degassing openings (18) against the penetration of potting composition; and
that between the welded connectors (14) and the foam plugs (15), recesses for introducing the potting composition into the interstices (20') between the individual cells (10) of the cell pack (10') are formed.

2. The cell pack according to claim 1,
**characterized in that**
the foam plugs (15) of all the individual cells (10) are combined integrally to form a foam mat (15') having the recesses (20).

3. The cell pack according to claim 2,
**characterized in that**
the outer contour of the foam mat (15') is adapted to the outer contour of the cell pack (10').

4. The cell pack according to claims 1-3,
**characterized in that**
sealing rings (13) which seal off the vicinity of the positive pole (17) having the degassing openings (18) from the outer contour of the individual cell (10) are disposed between the positive poles (17) and the welded connectors (14).

5. The cell pack according to claims 1-4,
**characterized in that**
the welded connector (14) is welded to the positive pole (17) and to the same or a different pole (11, 17) of an individual cell (10) disposed next to it.

6. The cell pack according to claim 5,
**characterized in that**
the welded connector (14) connects the positive pole (17) of one individual cell (10) to the negative pole (11) of a different individual cell (10).

7. The cell pack according to claim 5,
**characterized in that**
the welded connector (14) connects the positive pole (17) of the one individual cell (10) to the positive pole (17) of a different individual cell (10).

8. The cell pack according to claim 5,
**characterized in that**
the welded connector (14) connects the negative pole (11) of one individual cell (10) to the negative pole (11) of a different individual cell (10).

9. The cell pack according to claims 1-8,
**characterized in that**
the foam mat (15') is provided with a self-adhesive layer (16) on the side facing toward the cell pack (10').

## Revendications

1. Paquet de cellules (10') doté de plusieurs cellules individuelles (10) maintenues ensemble à l'aide d'une masse de remplissage, qui sont munies d'un pôle plus (17) et d'un pôle moins (11) et présentent dans la zone autour du pôle plus (17) des ouvertures de dégazage (18) et éventuellement au sein d'un coupe-circuit (CID),
**caractérisé en ce que** les cellules individuelles (10) sont reliées dans la zone du pôle plus (17) par un mince cordon de soudure (14), qui est relié avec le même pôle ou avec un autre pôle (11, 17) d'une cellule individuelle (10) disposée à côté au sein du paquet de cellules (10'), **en ce que** les faces avant sont recouvertes au-dessus des pôles plus (17) présentant les ouvertures de dégazage (18) de bouchons en mousse (15) qui sont perméables au gaz qui s'écoule des cellules individuelles (10) hors des ouvertures de dégazage (18) et protègent les ouvertures de dégazage (18) contre toute pénétration de masse de remplissage, et **en ce qu'**entre les cordons de soudure (14) et les bouchons de mousse (15) sont formés des évidements permettant la pénétration de la masse de remplissage dans les interstices (20') entre les cellules individuelles (10) du paquet de cellules (10').

2. Paquet de cellules selon la revendication 1, **caractérisé en ce que** les bouchons de mousse (15) de toutes les cellules individuelles (10) sont rassemblés en une pièce unique sous forme d'une natte de mousse (15') présentant les évidements (20).

3. Paquet de cellules selon la revendication 2, **caractérisé en ce que** le contour externe de la natte de mousse (15') est adapté au contour externe du paquet de cellules (10').

4. Paquet de cellules selon la revendication 1 à 3, **caractérisé en ce qu'**entre les pôles plus (17) et les cordons de soudure (14) sont disposées des bagues d'étanchéité (13) qui rendent étanche la zone du pôle plus (17) avec les ouvertures de dégazage (18) vis-à-vis du contour externe des cellules individuelles (10).

5. Paquet de cellules selon la revendication 1 à 4, **caractérisé en ce que** le cordon de soudure (14) est soudé avec le pôle plus (17) et un même pôle ou un autre pôle (11, 17) d'une cellule individuelle (10) disposée à côté.

6. Paquet de cellules selon la revendication 5, **caractérisé en ce que** le cordon de soudure (14) relie le pôle plus (17) d'une cellule individuelle (10) avec le pôle moins (11) d'une autre cellule individuelle (10).

7. Paquet de cellules selon la revendication 5, **caractérisé en ce que** le cordon de soudure (14) relie le pôle plus (17) d'une cellule individuelle (10) avec le pôle plus (17) d'une autre cellule individuelle (10).

8. Paquet de cellules selon la revendication 5, **caractérisé en ce que** le cordon de soudure (14) relie le pôle moins (11) d'une cellule individuelle (10) avec le pôle moins (11) d'une autre cellule individuelle (10).

9. Paquet de cellules selon la revendication 1 à 8, **caractérisé en ce que** la natte de mousse (15') est munie d'une couche autocollante (16) sur la face orientée vers le paquet de cellules (10').
